# EUROPÄISCHE PATENTANMELDUNG

(11) **EP 1 493 649 A2**
(43) Veröffentlichungstag der Anmeldung: **05.01.2005**
(21) Anmeldenummer: 04012386.1
(22) Anmeldetag: 26.05.2004
(51) Int. Cl.: B62D 5/04, B62D 15/02

(54) **Vorrichtung zur Erzeugung eines Lenkdrehmoments mit zwei Riementrieben**

(30) Priorität: 30.06.2003 DE 10329292
(71) Anmelder: ZF Lenksysteme GmbH, 73527 Schwäbisch Gmünd (DE)
(72) Erfinder: Budaker, Martin, 73540 Heubach (DE); Ochs, Michael, 73566 Bartholomä (DE); Hägele, Michael, 73432 Aalen (DE)

(57) **Zusammenfassung**

Eine Vorrichtung zur Erzeugung eines Drehmoments an einer manuell über eine Lenkhandhabe zu betätigenden Welle (1) weist einen auf die Welle wirkenden Elektromotor (4) auf. Der Elektromotor wirkt über einen Riemenantrieb (5) auf die Welle (1).

## Beschreibung

Die Erfindung betrifft eine Vorrichtung zur Erzeugung eines Drehmoments an einer manuell über eine Lenkhandhabe zu betätigenden Welle gemäß dem Oberbegriff von Anspruch 1.

Eine gattungsgemäße Vorrichtung ist aus der EP 0 854 075 A2 bekannt.

Die EP 0 854 075 A2 zeigt eine Lenksäule, die mechanisch nicht mit dem Lenkgetriebe eines Kraftfahrzeuges gekoppelt ist. Dies wird auch als Steer-by-Wire Lenkung bezeichnet. Die Lenksäule mit dem daran befindlichen Lenkrad erfüllt die Funktion eines Sollwinkelgebers, über den der angestrebte Lenkeinschlag der gelenkten Räder des Kraftfahrzeuges eingestellt wird. Auf der Nehmerseite wird das Lenkgetriebe entsprechend dem eingestellten Sollwinkel angetrieben, sodass das Kraftfahrzeug in die gewünschte Richtung gesteuert wird. Für ein sicheres Fahren ist erforderlich, dass der Fahrer über das Lenkrad Lenkreaktionskräfte wahrnimmt. Diese Lenkreaktionskräfte, die ein Maß für die Richtung und den Betrag des Radwinkeleinschlags darstellen, werden über einen Elektromotor in die Lenksäule eingeleitet, der als sogenannter Handmomentensteller bezeichnet wird.

Aus der DE 199 02 557 A1 ist eine redundante Vorrichtung zur Erzeugung von Drehmomenten an einer manuell über eine Handhabungseinrichtung zu betätigenden Welle bzw. einer Lenkspindel bekannt. Dabei sind zwei Elektromotoren vorgesehen, die zur Erzeugung des Drehmoments auf dieselbe Welle wirken, wobei der erste Elektromotor und der zweite Elektromotor jeweils anteilig einen Teil des Drehmoments erzeugen. Bei einem Ausfall einer der beiden Elektromotoren wird das Drehmoment vollständig von dem anderen Elektromotor aufgebracht. Die Elektromotoren sind derart dimensioniert, dass von ihnen jeweils einzeln im Normalbetrieb nicht das maximal erforderliche Drehmoment erzeugbar ist. Bei einem Ausfall eines Elektromotors ist vorgesehen, dass der andere Elektromotor in Überlast betrieben wird, sodass das Drehmoment nicht oder nur kurzzeitig abfällt.

Die Elektromotoren sind in einer Ausführungsform konzentrisch um die Welle angeordnet. In einer anderen Ausführungsform ist vorgesehen, dass die beiden Elektromotoren über ein seitlich neben der Welle angeordnetes Schneckengetriebe auf die Welle einwirken.

Von Nachteil ist dabei, dass für bestimmte Funktionalitäten, wie z.B. ein Endanschlag über die Motoren, ein hohes Drehmoment erforderlich ist. Bei einer konzentrischen Anordnung der Motoren müssen diese in ihrer Bauform relativ groß ausfallen, um dieses Moment zu erzeugen. Neben den daraus resultierenden hohen Herstellungskosten besteht außerdem der Nachteil, dass der Bauraum im Fahrzeug relativ eingeschränkt ist und sich derartige Motoren nur aufwendig integrieren lassen.

Aus der DE 199 02 557 A1 ist ebenfalls bekannt die Elektromotoren mittels einem Schneckengetriebe mit der Welle bzw. der Lenkspindel zu verbinden. Dies hat zwar den Vorteil, dass die Elektromotoren kleiner ausgeführt werden können, jedoch entstehen bei einem Zahnradgetriebe durch den Zahneingriff der einzelnen Räder Geräusche. Darüber hinaus ist der Zahneingriff am Lenkrad spürbar. Sowohl die Geräuschentwicklung als auch der spürbare Eingriff der Zähne ist jedoch in der Praxis nicht akzeptabel.

Die Ermittlung des Drehwinkels der Lenkspindel ist bei der DE 199 02 557 A1 relativ aufwendig, hierzu wird ein zusätzliches Getriebe mit Abtriebswelle benötigt.

Nachteilig ist außerdem, dass bei einem Ausfall eines Elektromotors vorgesehen ist, den anderen kurzzeitig in Überlast zu betreiben.

Der vorliegenden Erfindung liegt daher die Aufgabe zugrunde, die vorstehend genannten Nachteile des Standes der Technik zu lösen, insbesondere eine Vorrichtung zur Erzeugung eines Drehmoments an einer Welle zu schaffen, die die vorgenannten Nachteile löst, insbesondere einen geringen Bauraum erfordert, keine Geräusche oder spürbare Getriebeeingriffe verursacht sowie eine zuverlässige Funktion gewährleistet und kostengünstig und einfach herstellbar ist.

Erfindungsgemäß wird diese Aufgabe durch den kennzeichnenden Teil von Anspruch 1 gelöst.

Dadurch, dass der Elektromotor über einen Riemenantrieb auf die Welle wirkt, ist an der Lenkhandhabe kein Getriebeeingriff mehr spürbar. Darüber hinaus wird die Geräuschentwicklung minimiert. Der Elektromotor kann, da er über einen Riemen auf die Welle wirkt, klein und somit bauraumoptimiert ausgeführt werden. Ein Riemenantrieb hat sich zur Erzeugung eines Drehmoments an einer manuell über eine Lenkhandhabe zu betätigenden Welle als besonders geeignet herausgestellt, da er einfach und kostengünstig zu realisieren ist und eine zuverlässige Funktion gewährleistet.

Von Vorteil ist es, wenn wenigstens ein zweiter mittelbar oder unmittelbar, auf die Welle wirkender Elektromotor vorgesehen ist.

In einer vorteilhaften Weiterbildung der Erfindung ist dabei vorgesehen; dass der zweite Elektromotor über einen zweiten Riemenantrieb auf die Welle wirkt.

Dadurch, dass ein zweiter Elektromotor vorgesehen ist, der vorzugsweise über einen zweiten Riemenantrieb auf die Welle wirkt, wird eine vorteilhafte redundante Vorrichtung zur Erzeugung eines Drehmoments geschaffen. Falls ein Riemen eines der Riemenantriebe reißt oder ein Elektromotor ausfällt, kann der andere Elektromotor weiterhin ein Drehmoment aufbringen. Vorzugsweise sind die Motoren dabei derart ausgelegt, dass diese jeweils für sich in der Lage sind, ein für das Steuern eines Fahrzeugs notwendiges auf die Lenkhandhabe wirkendes Gegenmoment aufzubringen. Lediglich bei Fahrzuständen in denen ein sehr hohes Handmoment benötigt wird, z.B. bei einem Endanschlag über die Motoren, kann ein Motor alleine dieses Moment nicht mehr aufbringen. Dabei handelt es sich jedoch, wie der Erfinder herausgefunden hat, um Fahrzustände, die für das sichere Führen des Fahrzeugs unkritisch sind. Ein Betrieb des Elektromotors in Überlast ist daher nicht notwendig.

Dadurch, dass die Elektromotoren derart ausgebildet sind, dass jeweils das Drehmoment für einen Normalbetrieb zum Steuern von Fahrzeugrädern eines Fahrzeugs erzeugbar ist, jedoch ein im Bereich des Endanschlags der Fahrzeugräder benötigtes Maximaldrehmoment nicht einzeln darstellbar ist, können die Elektromotoren besonders klein und somit kostengünstig ausgebildet sein. Die gewünschte Erzeugung eines Handdrehmoments am Lenkrad zur Simulation von Lenkkräften oder Lenkreaktionskräften, z.B. bei einer Steer-by-Wire Lenkung, ist trotzdem zuverlässig gewährleistet.

In einer konstruktiven Ausbildung der Erfindung kann vorgesehen sein, dass die Motorwellen der Elektromotoren jeweils mit einem Sensor zur Erfassung des Drehwinkels versehen sind.

Zur Ermittlung des Drehwinkels der Welle wird dabei das Noniusprinzip angewandt. Dabei ist vorgesehen, dass die Elektromotoren unterschiedliche Übersetzungsverhältnisse aufweisen und mit unterschiedlichen Drehzahlen drehen.

In einer konstruktiven Ausgestaltung der Erfindung ist ferner vorgesehen, dass die Welle mit einer Sensoreinrichtung zur Erfassung des Drehwinkels versehen ist. Daraus lässt sich ein absoluter Winkel der Welle, z.B. nach Abschalten der Lenkung und erneutem Starten, bestimmen.

In einer alternativen Ausgestaltung der Erfindung kann vorgesehen sein, dass anstelle des zweiten Elektromotors eine auf die Welle wirkende Bremseinrichtung vorgesehen ist. In diesem Fall müsste der verbleibende erste Elektromotor zur Erzeugung des Maximaldrehmomen-. tes im Bereich des Endanschlages der Fahrzeugräder ausgebildet sein. Bei einem Ausfall dieses Elektromotors wird durch die Bremse ein Moment auf die Welle übertragen, wodurch ein entsprechendes Handdrehmoment an der Lenkhandhabe zu spüren ist.

Vorteilhafte Weiterbildungen und Ausgestaltungen der Erfindung ergeben sich aus den weiteren Unteransprüchen sowie aus den nachfolgend anhand der Zeichnung prinzipmäßig dargestellten Ausführungsbeispielen.

Es zeigt:
- Fig. 1: einen schematischen Längsschnitt durch die erfindungsgemäße Vorrichtung;
- Fig. 2: einen Längsschnitt durch einen Teilbereich der Welle mit einer aufgeschraubten Mutter und zwei Begrenzungsgliedern, die gemeinsam einen Endanschlag für die Welle bilden;
- Fig. 3: einen Querschnitt gemäß der Linie III-III der Fig. 2;
- Fig. 4: einen Querschnitt durch eine Welle mit einer Magnet-/Sensoranordnung; und
- Fig. 5: einen Längsschnitt durch eine Welle mit einer Magnet-/Sensoranordnung.

Die erfindungsgemäße Vorrichtung eignet sich in besonderem Maße für einen Einsatz in Steer-by-Wire Lenksystemen von Fahrzeugen. Derartige Lenksystem sind aus dem allgemeinen Stand der Technik hinlänglich bekannt, wozu nur beispielhaft auf die DE 199 02 557 A1 verwiesen wird, weshalb nachfolgend hierauf nicht näher eingegangen wird.

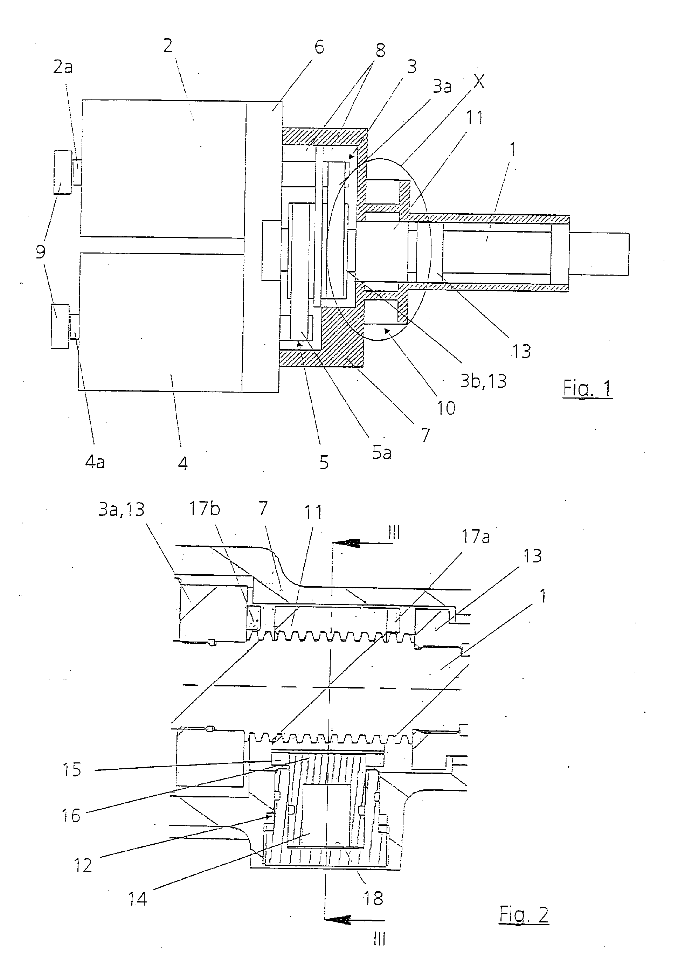

Fig. 1 zeigt eine Vorrichtung zur Erzeugung eines Drehmoments an einer Welle 1. Die Welle ist als Lenkspindel 1 ausgebildet und stellt dabei einen Teil einer Lenkvorrichtung dar. Die Lenkspindel 1 ist in üblicher Weise mit einer nicht dargestellten Lenkhandhabe bzw. einem Lenkrad verbunden. Mittels der Lenkhandhabe ist die Lenkspindel 1 manuell zu betätigen. Zur Erzeugung eines Handdrehmoments am Lenkrad zur Simulation von Lenkkräften oder Lenkreaktionskräften weist die erfindungsgemäße Vorrichtung einen Elektromotor 2 auf, der über einen Riemenantrieb 3 auf die Lenkspindel 1 wirkt. Aus Redundanzgründen ist ein zweiter Elektromotor 4 vorgesehen, der im Ausführungsbeispiel über einen zweiten Riemenantrieb 5 auf die Lenkspindel 1 wirkt. Die beiden Elektromotoren 2, 4 sind parallel zu der Lenkspindel 1 angeordnet. Die beiden Elektromotoren 2, 4,erzeugen gemeinsam ein Drehmoment auf die Lenkspindel 1:

Im Ausführungsbeispiel sind die beiden Elektromotoren 2, 4 aus Kostengründen baugleich ausgebildet. Es kann jedoch auch vorgesehen sein, dass unterschiedlich starke Elektromotoren eingesetzt werden.

Die Elektromotoren 2, 4 sind mit einer Verbindungsplatte 6 verbunden, wobei die Elektromotoren 2, 4 mittels einer bekannten und folglich nicht näher dargestellten Exzentereinstellung frei einstellbar sind, sodass der jeweilige Riemenantrieb 3, 5 mit der vorgesehenen Kraft gespannt werden kann.

Wie aus Fig. 1 ersichtlich, ist die Lenkspindel 1 an ihrem den Elektromotoren 2, 4 zugewandten Ende von einem Gehäuse 7 umgeben, in dem die Lenkspindel 1 drehbar gelagert ist. Die Riemenantriebe 3, 5 bzw. die Riemen 3a, 5a der Riemenantriebe 3, 5 laufen jeweils in separaten bzw. voneinander getrennten Kammern 8. Die Kammern 8 können dabei sowohl aus dem Gehäuse 7 ausgeformt, wie auch mittels weiterer baulicher Maßnahmen erstellt bzw. abgeteilt werden. Durch die Kammern 8 in denen die Riemen 3a, 5a der Riemenantriebe 3, 5 verlaufen, wird verhindert, dass im Fall eines Riemenrisses der andere Riemenantrieb 3, 5 behindert oder blockiert wird.

Die Elektromotoren 2, 4 weisen in üblicher Weise jeweils eine Motorwelle 2a, 4a auf. Die Motorwellen 2a, 4a sind jeweils mit einem Sensor 9 zur Erfassung des Drehwinkels versehen. Mit den Sensoren 9 kann der relative Drehwinkel des jeweiligen Elektromotors 2, 4 erfasst werden. Zur Erfassung des Drehwinkels der Lenkspindel 1 wird das Noniusprinzip angewandt. Die Elektromotoren 2, 4 weisen hierfür unterschiedliche Übersetzungsverhältnisse auf und drehen mit unterschiedlichen Drehzahlen.

Um einen absoluten Winkel der Lenkspindel 1 zu erhalten, ist die Lenkspindel 1 mit einer Sensoreinrichtung 10 versehen.

Da keine mechanische Verbindung zwischen der Lenkspindel 1 bzw. dem nicht dargestellten Lenkrad und einem ebenfalls nicht dargestellten Radsteller, der zum Auslenken von Fahrzeugräder dient, besteht, könnte man theoretisch die Lenkspindel 1 beliebig oft drehen. Daraus würde jedoch ein negatives Lenkverhalten resultieren, Um dies zu verhindern ist im Ausführungsbeispiel ein mechanischer Endanschlag vorgesehen.

Der vorteilhafte mechanische Endanschlag ist in Fig. 2 prinzipmäßig dargestellt.

Fig. 2 zeigt eine mögliche Ausführungsform des in Fig. 1 lediglich schematisch dargestellten und als Einzelheit "X" bezeichneten Bereichs. Hierbei ist vorgesehen, dass die Lenkspindel 1 in einem Teilbereich mit einem Außengewinde versehen ist, auf dem eine Mutter 11 angeordnet ist, welche aufgrund einer Wirkverbindung mit einer Linearführung 12 bei einer Drehbewegung der Lenkspindel 1 linear zwischen zwei Begrenzungsgliedern 13 bewegbar ist und somit die Drehbewegung der Lenkspindel 1 begrenzt. Wie aus Fig. 2 ebenfalls ersichtlich ist, wird die Linearführung 12 durch ein Kraftelement 14 an die Mutter 11 gedrückt. Das Kraftelement 14 drückt die Linearführung 12 dabei derart an die Mutter 11, dass sich die konzentrische Lage der Mutter 11 zu der Lenkspindel 1 verschiebt. Somit liegen die Gewindeflanken zwischen der Lenkspindel 1 und der Mutter 11 auf der Linearführungsseite an. Darüber hinaus wird durch das Kraftelement 14 sichergestellt, dass die Linearführung 12 spielfrei mit der Mutter 11 verbunden ist.

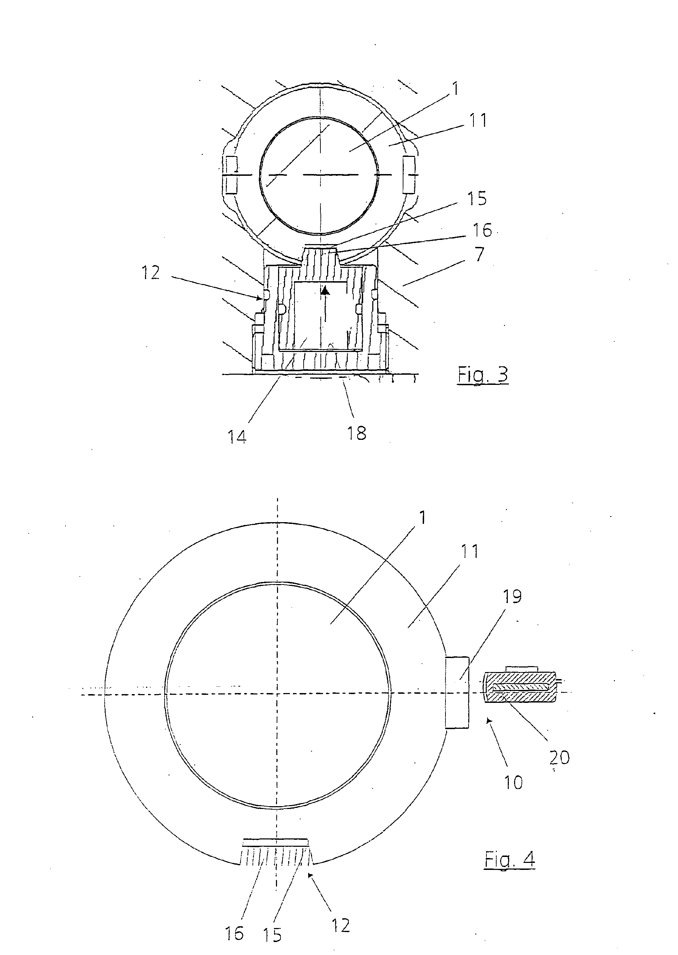

Wie sich in einfacher Weise aus einer Zusammenschau der Fig. 2 und der Fig. 3 ergibt, wird die Mutter 11 aufgrund der Wirkverbindung mit der Linearführung 12 gegen ein Verdrehen gesichert. Eine Drehbewegung der Lenkspindel 1 führt somit zu einer Linearbewegung der Mutter 11 axial zur Lenkspindel 1. Die Linearbewegung der Mutter 11 wird durch die zwei Begrenzungsglieder, die im Ausführungsbeispiel als Begrenzungsplatten 13 ausgebildet sind, begrenzt.

Um die Mutter 11 am Mitdrehen zu hindern, ist im Ausführungsbeispiel eine Nut-Federverbindung zwischen der Mutter 11 und der Linearführung 12 vorgesehen (siehe Fig 3). Dabei ist die Mutter 11 mit einer Längsnut 15 versehen, die einen trapezförmigen Querschnitt aufweist. In die Längsnut 15 der Mutter 11 greift eine Feder, die im Ausführungsbeispiel als Steg 16 der Linearführung 12 ausgebildet ist, ein.

Die Breite eines Nutgrundes der Längsnut 15 ist im Ausführungsbeispiel geringer als die Breite einer darauf gerichteten Frontfläche des Steges 16. Dadurch ist sichergestellt, dass die Flanken des Steges 16 in Kontakt mit den Flanken der Längsnut 15 kommen, bevor die Frontfläche in Kontakt mit dem Nutgrund kommt. Eine spielfreie und sichere Verbindung zwischen der Linearführung 12 bzw. dem Steg 16 und der Mutter 11 bzw. der Längsnut 15 ist somit gewährleistet.

Die Linearführung 12 ist, wie aus dem Ausführungsbeispiel ersichtlich, im wesentlichen als Druckstück ausgebildet. Das Kraftelement ist als Feder 14 ausgebildet. Alternativ dazu kann das Kraftelement, zum Verspannen der Linearführung 12 mit der Mutter 11, auch als elastisches Element ausgebildet sein.

Wie aus Fig. 2 ersichtlich, weisen die Mutter 11 sowie die Begrenzungsplatten 13 Anschlagelemente 17a, 17b auf. Bei der Drehung der Lenkspindel 1 bewegt sich die Mutter 11 auf die lenkspindelfesten Begrenzungsplatten 13 zu. Je nach Drehrichtung der Lenkspindel 1 begrenzt dabei eine der Begrenzungsplatten 13 die Linearbewegung der Mutter 11. Dabei legt sich ein Anschlagelement 17a der Mutter 11 in einer Drehbewegung an ein Anschlagelement 17b der entsprechenden Begrenzungsplatte 13 an. Somit ist die Endposition erreicht und das Drehmoment stützt sich von der Lenkspindel 1 über die Mutter 11 auf die Linearführung 12 und von dort auf das Gehäuse 7 ab.

Zur Reduzierung der Kräfte beim schnellen Lenken gegen die als Begrenzungsplatte 13 ausgebildeten mechanischen Anschläge können die Anschlagelemente 17a, 17b in der Mutter 11 bzw. den Begrenzungsplatten 13 elastisch geführt sein.

Eine weitere Möglichkeit zur Reduzierung der Kräfte beim schnellen Lenken gegen die Begrenzungsplatten 13 kann darin bestehen, die Lenkspindel 1 über einen gewissen Bereich im Durchmesser zu reduzieren, so dass diese als Torsionsstab dient. Dies ermöglicht den Abbau der Kräfte über einen größeren Verdrehbereich.

In der Endposition, wenn große Kräfte abgestützt werden müssen, zentriert sich die Mutter 11, die durch die Feder 14 aus der konzentrischen Lage zu der Lenkspindel 1 verschoben wurde, wieder auf der Lenkspindel 1. Dadurch weicht die Linearführung 12 gegen die Federkraft der Feder 14 aus. Dieses Ausweichen der Linearführung 12 wird, damit große Momente abgestützt werden können, durch einen Anschlag 18 begrenzt.

Die in Fig. 2 dargestellte Mutter 11 weist an beiden, den Begrenzungsplatten 13 zugewandten Seiten jeweils ein Anschlagelement 17a auf. Zeichnerisch ist jedoch aufgrund der Schnittdarstellung nur ein Anschlagelement 17a dargestellt. Analog dazu weist jede Begrenzungsplatte 13 ein Anschlagelement 17b auf, wobei ebenfalls aufgrund der Schnittdarstellung nur ein Anschlagelement 17b an einer Begrenzungsplatte 13 dargestellt ist.

Die Verbindung zwischen den Begrenzungsplatten 13 und der Lenkspindel 1 ist im Ausführungsbeispiel gemäß Fig. 2 und Fig. 3 als Verzahnung ausgeführt. Dies gewährleistet eine sichere Momentenübertragung. Des weiteren kann somit die Position der Begrenzungsplatten 13, die einen Faktor zur Bestimmung des maximalen Lenkwinkels bzw. der maximalen Anzahl an Lenkumdrehungen darstellt, exakt eingestellt und gegebenenfalls nachjustiert werden.

In besonders vorteilhafter Weise kann, wie sich aus einer Zusammenschau der Fig. 1 und Fig. 2 ergibt, vorgesehen sein, dass eine Begrenzungsplatte 13 durch ein Riemenrad 3b des der Mutter 11 zugewandten Riemenantriebs 3 gebildet ist. Hieraus ergibt sich in vorteilhafter Weise eine Bauteilreduzierung und somit eine Kosteneinsparung.

Ein vorteilhaftes Verfahren zur Montage und Einstellung eines Endanschlages der Lenkspindel 1 besteht darin, die Mutter 11 auf die Lenkspindel 1 zu montieren und eine Wirkverbindung zu der Linearführung 12 zu erzeugen. Anschließend, wird die Mutter 11 auf eine vorgesehene Endposition bewegt. In dieser Position wird die erste Begrenzungsplatte 13 bzw. das Riemenrad 3b so montiert, dass sich die Anschlagelemente 17a, 17b der Mutter 11 bzw. der Begrenzungsplatte 13 berühren. In einem weiteren Schritt wird dir Mutter 11 auf die entgegengesetzte Endposition bewegt. In dieser Position wird die zweite Begrenzungsplatte 13 ebenfalls so montiert, dass sich die Anschläge 17a, 17b berühren. Die Anzahl der Lenkradumdrehungen bzw. der max. Lenkwinkel ist somit genau eingestellt.

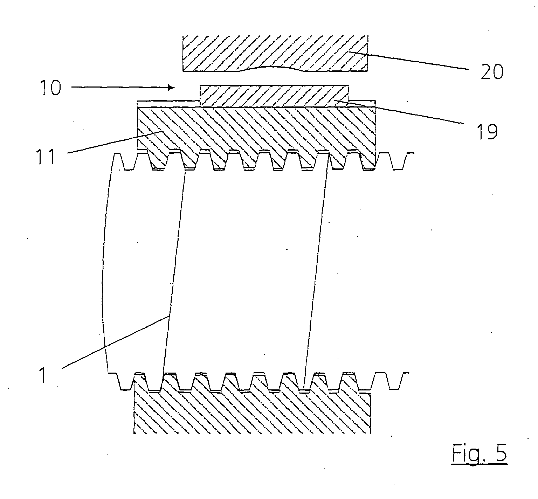

Fig. 4 und Fig. 5 zeigen ein mögliches Verfahren bzw. eine Vorrichtung zum Erfassen eines Drehwinkels mittels der in Fig. 1 lediglich angedeuteten Sensoreinrichtung 10 als Drehwinkelgeber. Dadurch soll der Drehwinkel des nicht dargestellten Lenkrades und damit auch der Drehwinkel der Lenkspindel 1 absolut ermittelt werden. Die Sensoreinrichtung 10 ist dabei als Magnet-/Sensoranordnung wie nachfolgend beschrieben ausgebildet. Wie bereits vorstehend beschrieben, wird durch eine Drehung am Lenkrad eine Drehung der Lenkspindel 1 eingeleitet. Über ein Gewinde der Lenkspindel 1 wird diese Drehbewegung in eine axiale Bewegung der Mutter 11 umwandelt. Wie aus Fig. 4 und Fig. 5 ersichtlich ist, ist auf der Mutter 11 ein Magnet 19 befestigt, der sich mit der Mutter 11 axial bewegt. Die Bewegung des Magneten 19 wird dabei über einen Sensor 20 erfasst. Im Ausführungsbeispiel ist der Sensor als magnetoresistiver Sensor 20 ausgebildet. Dieser misst die Feldrichtung des Magneten 19. Da die Position des Magneten 19 fix ist und die Steigung des Gewindes der Lenkspindel 1 bzw. der Mutter 11 bekannt ist, lässt sich so über die Position des Magneten 19 zum magnetoresistiven Sensor 20 ein Rückschluss auf den absoluten Drehwinkel ziehen.

Selbstverständlich kann die in Fig. 4 und Fig. 5 dargestellte Ausführungsform in die Ausführungsform gemäß Fig. 2 und Fig. 3 integriert werden, jedoch wurde aus Übersichtlichkeitsgründen eine separate und einzelne Darstellung gewählt.

In der bereits in Fig. 2 und Fig. 3 beschriebenen Weise verhindert auch bei der Ausführungsform gemäß Fig. 4 und Fig. 5 die Linearführung 12 ein Mitdrehen der Mutter 11 und sorgt dafür, dass aufgrund der Feder 14 (in Fig. 4 und Fig. 5 nicht dargestellt) die Verbindung zwischen der Linearführung 12 und der Mutter 11 spielfrei ist. Die Mutter 11 ist somit drehfest, aber axial verschiebbar. Wie bereits erwähnt, ist die Längsnut 15 der Mutter 11 vorzugsweise trapezförmig ausgeführt. Die Vorteile hierfür bzw. die angepasste Form des Steges 16, der in die Längsnut 15 ragt, wurden bereits vorstehend beschrieben.

Wie sich aus Fig. 5 ergibt, ist der für das magnetoresistive Messverfahren notwendige Magnet vorzugsweise als Stabmagnet 19 ausgebildet. Alternativ dazu ist auch eine Ausgestaltung als Magnetring vorstellbar.

Um eine eindeutige axiale Position des Stabmagneten 19 zu dem magnetoresistiven Sensor 20 zu garantieren, ist eine spielfreie Einstellung des verwendeten Getriebes (Lenkspindel 1/Mutter 11) notwendig. Dies kann in vorteilhafter Weise über den gleichen Einstellmechanismus wie bei der Verbindung zwischen Linearführung 12/Mutter 11 realisiert werden. Hierzu ist der Einsatz eines modifizierten Gewindes (Lenkspindel 1/Mutter 11) vorteilhaft, das genügend Kopfspiel hat, damit die angefederte Linearführung 12 die Gewindeflanken der Lenkspindel 1 und der Mutter 11 gegeneinander drücken kann. Wie bereits beschrieben, wird die Mutter 11 dadurch aus ihrer konzentrischen Lage quer zur Drehachse bewegt. Die Ausbildung des modifizierten Gewindes (Lenkspindel 1/Mutter 11) als Trapezgewinde mit Kopfspiel eignet sich hierfür in besonders vorteilhafter Weise.

Eine Ausbildung des Gewindes (Lenkspindel 1/Mutter 11) als Trapezgewinde eignet sich auch für den Anwendungsfall gemäß Fig. 2 und Fig. 3 in besonders vorteilhafter Weise.

Der magnetoresistive Sensor 20 ist gehäusefest. Um die axial notwendigen Toleranzen der Lagerung der Lenkspindel/Mutter-Einheit so groß wie möglich ausführen zu können, kann ein größerer Stabmagnet 19 verwendet werden, als es der Messbereich benötigen würde. Über ein einmaliges Einmessen nach dem Einbau wird die Position des Stabmagneten 19 zum magnetoresistiven Sensor 20 ermittelt.

In einer alternativen Ausführungsform ist selbstverständlich auch vorstellbar, dass der Magnet bzw. Stabmagnet 19 gehäusefest und der Sensor bzw. magnetoresistive Sensor 20 auf der Mutter 11 mitbewegt wird. Ebenso sind mehrere Magnete bzw. Stabmagnete 19 und mehrere Sensoren bzw. magnetoresistive Sensoren 20 aufgrund von Redundanzgründen einsetzbar.

### Bezugszeichen

- 1: Welle, Lenkspindel
- 2: Elektromotor
- 2a: Motorwelle
- 3: Riemenantrieb
- 3a: Riemen
- 3b: Riemenrad
- 4: zweiter Elektromotor
- 4a: Motorwelle
- 5: Riemenantrieb
- 5a: Riemen
- 6: Verbindungsplatte
- 7: Gehäuse
- 8: Kammer
- 9: Sensor
- 10: Sensoreinrichtung
- 11: Mutter
- 12: Linearführung
- 13: Begrenzungsglied, Begrenzungsplatten
- 14: Kraftelement, Feder
- 15: Längsnut
- 16: Steg
- 17a: Anschlagelement der Mutter
- 17b: Anschlagelement der Begrenzungsplatte
- 18: Anschlag
- 19: Magnet, Stabmagnet
- 20: Sensor, magnetoresistiver Sensor

## Patentansprüche

1. Vorrichtung zur Erzeugung eines Drehmoments an einer manuell über eine Lenkhandhabe zu betätigenden Welle (1), mit einem auf die Welle (1) wirkenden Elektromotor(2), der über einen Riemenantrieb (3) auf die Welle (1) wirkt, und wenigstens ein zweiter mittelbar oder unmittelbar auf die Welle (1) wirkender Elektromotor (4) vorgesehen ist, der über einen zweiten Riemenantrieb (5) auf die Welle (1) wirkt,
**dadurch gekennzeichnet, dass**
die Riemenantriebe (3,5) in separaten Kammern (8) eines Gehäuses (7) verlaufen.

2. Vorrichtung nach Anspruch 1,
**dadurch gekennzeichnet, dass**
die beiden Elektromotoren (2,4) parallel zu der Welle (1) angeordnet sind.

3. Vorrichtung nach Anspruch 1, 2 oder 3,
**dadurch gekennzeichnet, dass**
die beiden Elektromotoren (2,4) derart ausgebildet sind, dass jeweils das Drehmoment für einen Normalbetrieb zum Steuern von Fahrzeugrädern eines Fahrzeuges erzeugbar ist, jedoch ein im Bereich des Endanschlags der Fahrzeugräder benötigtes Maximaldrehmoment nicht einzeln darstellbar ist.

4. Vorrichtung nach einem der Ansprüche 1 bis 3,
**dadurch gekennzeichnet, dass**
die Elektromotoren (2,4) baugleich ausgebildet sind.

5. Vorrichtung nach einem der Ansprüche 1 bis 4,
**dadurch gekennzeichnet, dass**
die Riemenantriebe (3,5) jeweils über eine Exzentereinrichtung einstellbar sind.

6. Vorrichtung nach einem der Ansprüche 1 bis 5,
**dadurch gekennzeichnet, dass**
die Motorwellen (2a,4a) der Elektromotoren (2,4) jeweils mit einem Sensor (9) zur Erfassung des Drehwinkels versehen sind.

7. Vorrichtung nach Anspruch 6,
**dadurch gekennzeichnet, dass**
die Elektromotoren (2,4) unterschiedliche Übersetzungsverhältnisse aufweisen.

8. Vorrichtung nach Anspruch 1,
**dadurch gekennzeichnet, dass**
eine auf die Welle (1) wirkende Bremseinrichtung vorgesehen ist.

9. Vorrichtung nach einem der Ansprüche 1 bis 8,
**dadurch gekennzeichnet, dass**
die Welle (1) in einem Teilbereich mit einem Außengewinde versehen ist, auf dem eine Mutter (11) angeordnet ist, welche aufgrund einer Wirkverbindung mit einer Linearführung (12) bei einer Drehbewegung der Welle (1), in Abhängigkeit der Drehbewegung, linear zwischen zwei Begrenzungsgliedern (13) bewegbar ist und somit die Drehbewegung der Welle (1) begrenzt, und wobei ein Kraftelement (14) die Linearführung (12) derart an die Mutter (11) drückt, dass sich die konzentrische Lage der Mutter (11) zu der Lenkspindel (1) verschiebt.

10. Vorrichtung nach Anspruch 9,
**dadurch gekennzeichnet, dass**
die Mutter (11) eine trapezförmige Längsnut (15) und die Linearführung (12) einen für einen Eingriff in die Längsnut (15) geeigneten Steg (16) aufweist.

11. Vorrichtung nach Anspruch 1 und 9,
**dadurch gekennzeichnet, dass**
ein Begrenzungsglied (13) durch ein Riemenrad (3b) des der Mutter (11) zugewandten Riemenantriebs (3) gebildet ist.

12. Vorrichtung nach einem der Ansprüche 1 bis 11,
**dadurch gekennzeichnet, dass**
die Welle (1) mit einer Sensoreinrichtung (10) zur Erfassung des Drehwinkels versehen ist.

13. Vorrichtung nach Anspruch 12,
**dadurch gekennzeichnet, dass**
die Sensoreinrichtung (10) als Magnet-/Sensoranordnung ausgebildet ist, wobei ein Magnet (19)
oder ein Sensor (20) an der Mutter (11) befestigt ist und wobei das jeweils andere Element der Magnet-/Sensoranordnung am Gehäuse (7) angeordnet ist.

14. Vorrichtung nach Anspruch 13,
**dadurch gekennzeichnet, dass**
der Magnet als Stabmagnet (19) oder Ringmagnet und der Sensor als magnetoresistiver Sensor (20) ausgebildet ist.

15. Vorrichtung nach Anspruch 13 oder 14,
**dadurch gekennzeichnet, dass**
die Sensoreinrichtung (10) mehrere Magnete (19) und zugeordnete Sensoren (20) aufweist.
